# EUROPEAN PATENT APPLICATION

(11) **EP 1 331 745 A1**
(43) Date of publication of application: **30.07.2003**
(21) Application number: 02250534.1
(22) Date of filing: 26.01.2002
(51) Int. Cl.: H04B 10/17

(54) **Apparatus and method for 3R regeneration of optical signals**

(71) Applicant: CORNING INCORPORATED, Corning, N.Y. 14831 (US)
(72) Inventor: Cotter, David, Woodbridge, Suffolk IP12 4JN (GB); Webb, Roderick Peter, Hacheston, Woodbridge, Suffolk IP13 0DX (GB); Manning, Robert John, Ipswich, Suffolk IP1 6RB (GB)
(74) Representative: Poole, Michael John

(57) **Abstract**

Apparatus and a method for 3R regeneration of optical digital signals in which a modulator, preferably an electroabsorption modulator, is driven by an electrical clock synchronised with optical input pulses (preferably by a phase-locked-loop controller) is located downstream of a 2R regenerator so as to receive its output.

Because the pulses are reshaped by the 2R regenerator before they are retimed by the modulator, a smaller proportion of the pulse energy is likely to be lost in retiming, and the effect of "chirp" from the 2R regenerator may be diminished because the parts of the pulse most affected by it are removed in retiming.

## Description

This invention relates to apparatus and a method for regenerating optical digital (pulse) signals, in telecommunications and other optical data-handling systems.

Amplitude Modulated optical digital signals (in which binary "one" is represented by the presence of optical power and binary "zero" by its absence) can be standardised in one of two formats:
(a) in the return-to-zero (RZ) format, individual optical pulses are initially generated with a symmetrical "bell-shaped" waveform (approximating a Gaussian distribution curve or a hyperbolic secant); while
(b) (b) in non-return-to-zero (NRZ) format, optical power remains present between adjacent "one" digit positions. In RZ format, pulse length may be set around half the pulse interval, for maximum optical power, or it may be set short compared with the pulse interval, which in principle allows simple interleaving of a number of data streams to establish optical time-division multiplexing, if that should become a requirement; this is plainly not possible with NRZ format. NRZ format is currently preferred for systems operating at data rates up to 10Gbit/s, but it seems likely that RZ format will be adopted for future systems operating at 40Gbit/s or at higher rates.

This invention works primarily with RZ format, but can be adapted to receive and process input signals in NRZ format if required; it is thus expected to be applied primarily (but not exclusively) to systems operating at 40 Gbit/s or faster.

Once the light pulses enter a telecommunications system or other data handling equipment, they are subject to degradation from a variety of sources: for example, absorption, chromatic dispersion and polarisation mode dispersion, cross-talk, accidental partial reflections, optical noise (typically arising in amplifiers) and self-phase and cross-phase modulation, which may reduce amplitude, increase rise and fall times, often unequally, alter rise and fall profiles, disturb pulse spacing and possibly cause pulses to overlap and in extreme risk that they become indistinguishable (such degradation is sometimes referred to as "eye closure" because it is best observed by superimposing pulses, and their "absences" representing "0" digits, on an oscilloscope, resulting in an image bearing some resemblance to an eye); so if the number of bit errors at receiver is not to become unacceptable, they need to be restored at least approximately to their original form or else converted to a consistent and acceptable but different form: both options are included in the term "regenerated".

Further, the requirements for a flexible multiplexing system that allows multiplexed channels to be "dropped" and new channels independently generated to be "inserted" into the resulting vacant "slot" requires precise synchronisation of the pulse streams based on "clock recovery" from one of the data-streams; and where wavelength-division multiplexing is also used, the ability to transfer data from one wavelength to another is required.

Signal amplitude is relatively easy to restore, for instance by using rare-earth doped fibre amplifiers or semiconductor optical amplifiers, but this is likely to aggravate other kinds of degradation.

Regeneration that increases amplitude and improves pulse shape, but does not re-time pulses, is called "2R" regeneration, and is achieved in a number of ways; in particular, 2R regeneration can be achieved, generally in combination with wavelength conversion, using a semiconductor optical amplifier (SOA) operating in cross-phase modulation mode followed by a Mach-Zehnder interferometer with a delay in one arm. Incoming signal and a continuous wave at a new wavelength are input to the SOA, either in the same direction (in which case it is desirable to block the original signal at the outlet side of the SOA by means of a band-pass filter) or in counter-propagating direction (when a filter may be unnecessary); on arrival of an input pulse, the carrier density of the SOA is very quickly changed due to stimulated recombination, recovering relatively slowly because the carrier lifetime is long compared with the pulse rate and the rate of recombination changes only slightly in response to the input light pulse; this results in a corresponding fast-rise slow-fall transient change in the refractive index seen by the continuous wave and a like transient phase change in the continuous wave. The interferometer delay needs fine adjustment to achieve an appropriate optical phase relationship: usually it is chosen so that interference is destructive for the continuous-wave light in the absence of an input signal, and the result is that each input pulse produces an output pulse at the continuous-wave wavelength whose rise follows the rapid rise of the non-delayed transient while its fall follows the rapid rise of the delayed transient, giving a good pulse shape (but the phase relation, and the resulting output pulse profile, can be inverted if desired).

Depending on the input power level of the continuous wave light and other factors, the amplitude of the output pulse may be greater or less than that of the input signal pulse; but the primary function of this step is to restore the shape of the pulse, and usually additional amplification will be needed to obtain the desired output amplitude, and in some cases to allow the regenerator to operate effectively; this may be provided, for example, by doped-fibre amplifiers or semiconductor optical amplifiers at the input, output and/or in other positions.

Retiming by using an electroabsorption modulator (EAM) as a phase-sensitive detector is well established, and WO99/05812 describes how the electroabsorption modulator may be simultaneously used for demultiplexing and wavelength translation.

3R regenerators have been proposed in which a modulator is first used to retime pulses and they are then amplified and reshaped by a non-linear optical amplifier, but this has the disadvantage that the modulator necessarily shortens the input pulses and so reduces their energy, requiring additional gain to compensate.

The present invention provides a 3R regenerator in which this disadvantage is usefully reduced.

In accordance with one aspect of the invention, a 3R regenerator comprises a modulator, an electrical clock for driving the modulator, and a controller for maintaining synchronism of the clock with optical input pulses and a 2R regenerator, and is characterised in that the modulator is located downstream of and receives the output of the 2R regenerator.

Preferably the modulator is an electroabsorption modulator, but other modulators, including in particular lithium niobate modulators, can be used.

Preferably the controller is a phase-locked loop controller, but other types of controller, for example the narrow-band filter and locked oscillator types, can be used.

Preferably the 2R regenerator is also a wavelength translator, of the kind comprising a time-delay interferometer, at least one semiconductor optical amplifier and a source of continuous wave of the desired output wavelength coupled so that the SOA operates in cross-phase modulation mode. For convenience, this type of 2R-regenerator/wavelength translator will be referred to as a delayed interference signal-wavelength converter or DISC; two DISC's may be provided and operated in series, in order to provide a simple means of restoring the original wavelength when translation is not required. Conventional opinion has been that the length of delay in a DISC should be somewhat greater than the pulse length of the signal, in order to maximise the energy content of the pulses: but this results in pulse lengthening, and an alternative is to use a delay of about 30-70% of the input pulse length in order that the pulse length is maintained relatively constant,as more fully described and claimed in our application GB0128685.5 filed 30 November, 2001.

Most preferred is a DISC in which the input signal and continuous wave are coupled to the same side of a single SOA, and a Mach-Zehnder interferometer is coupled to the other side. Alternatives include a Mach-Zehnder interferometer with separate, preferably identical, SOA's in its two arms and with continuous wave input split and supplied to both SOA's and a Sagnac interferometer with a single SOA.

Preferably the electrical clock is set to turn on the modulator for a time shorter than the length of the pulses received from the 2R regenerator, in order to provide tolerance for variations in the precise timing of pulses ("jitter") in the input signals.

Preferably the modulator itself acts as a phase-sensitive detector, for example in the way proposed in WO99/05812.

To enable the regenerator of the invention to process an incoming data-stream in NRZ format, it may first be converted to RZ format by a modulator; this may with appropriate routing serve also as the modulator that re-times the output pulses.

The invention includes a method of "3R" regeneration of digital optical signals that have become degraded comprising retiming pulses of the signal by means of a modulator driven by an electrical clock controlled to maintain synchronism with optical input pulses and reshaping pulses of the signal by means of a 2R regenerator, characterised by locating the modulator downstream of the 2R regenerator so as to receive its output.

Preferably the 2R regenerator is also used as a wavelength translator, or two 2R regenerators may be operated in series, as already described, to generate output at the same wavelength as the incoming signal.

Preferably modulator is turned on by the electrical clock for a time shorter than the length of the pulses received from the 2R regenerator, in order to provide tolerance for variations in the precise timing of pulses ("jitter") in the input signals.

Preferably the modulator itself is used as a phase-sensitive detector, for example in the way proposed in WO99/05812.

The invention includes a method of processing an incoming data-stream in NRZ format comprising first converting it to RZ format by a modulator; this may with appropriate routing be used also as the modulator that retimes the pulses.

In the preferred 2R regenerator, the operation of the Mach-Zehnder interferometer is dependent on phase changes in the semiconductor optical amplifier, but these phase changes also result in unwanted "chirp" on the output of the interferometer; an additional advantage of locating the electroabsorption modulator downstream of the 2R regenerator is that the parts of the pulse where the chirp is greatest are removed.

The invention will be further described, by way of example, with reference to the accompanying drawings in which:
Figure 1 is a diagram of a simple 3R regenerator/wavelength translator in accordance with the invention;
Figure 2 shows another 3R regenerator/wavelength translator in accordance with the invention using the electroabsorption modulator in counter-propagating mode as phase-sensitive detector for re-timing;
Figure 3 shows a further 3R regenerator/wavelength translator in accordance with the invention using the electroabsorption modulator in co-propagating mode as phase-sensitive detector for re-timing;
Figures 4-6 illustrate modifications enabling the processing of NRZ format input; and
Figures 7 and 8 illustrate the use of alternative types of 2R Regenerator

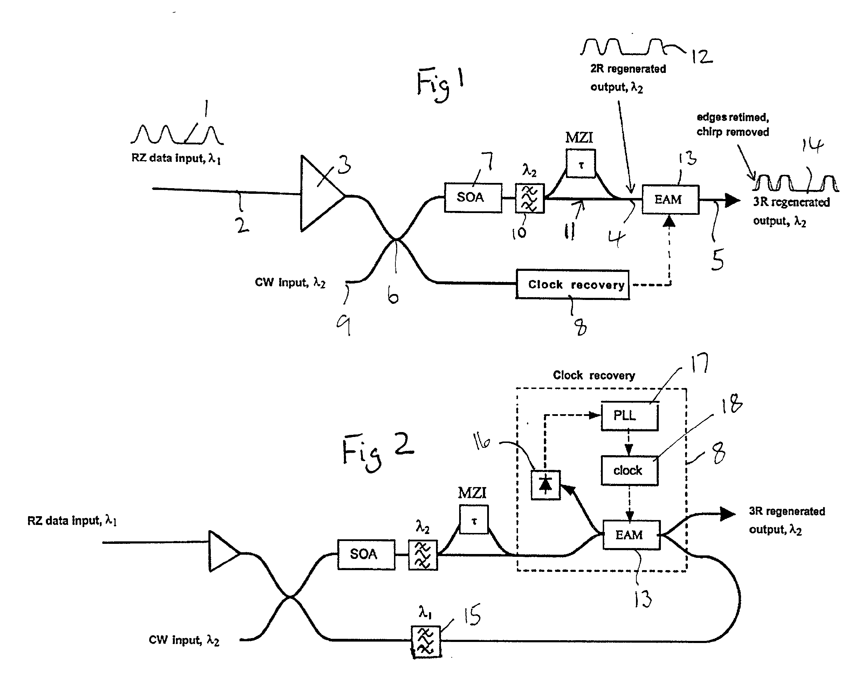

In the circuit shown in Figure 1, a degraded input data-stream 1 at a first wavelength λ1 is received at 2; for purposes of illustration, a linear optical amplifier is shown at 3 where it acts on the unregenerated data-stream: its main function here is to amplify the signal to a level at which the regenerator itself operates effectively and preferably optimally. Additionally (or alternatively, if the input signal is strong enough) a linear optical amplifier will usually be positioned to act on the 3R regenerated output at 5, where its main function is to obtain the desired output power level. The incoming or amplified data-stream is passed to a splitter/coupler 6 from which a major part goes to the semiconductor optical amplifier 7 and a minor part to a clock recovery unit 8, in this case of any conventional design. An unmodulated continuous wave at a different wavelength λ₂ (which will become the output wavelength) is generated locally and enters at 9 to pass predominantly through the semiconductor optical amplifier 7, in co-propagation with the signal. The semiconductor optical amplifier 7 modulates the λ₂ carrier in the manner described above, and a bandpass filter 10 prevents the original signal at wavelength λ₁ from propagating further. A Mach-Zehnder interferometer 11 cooperates with the semiconductor optical amplifier to complete a 2R regenerator, and its delay is set so that it generates a stream of output pulses (12) in which the peak amplitude is sustained for sufficiently more than the desired length of the output pulses to be regenerated to provide a safe margin for jitter (it will be remembered that the lengths of these pulses are determined by the interferometer delay period and not limited by the length of the input pulses).

This stream of pulses is now retimed by electroabsorption modulator which is turned on by the clock recovery unit 8 for a time period corresponding to the desired output pulse length and centred on the time-averaged pulses arriving there from the 2R regenerator. A 3R regenerated output pulse stream 14, aligned with the central part of the incoming signal pulses, is thus obtained.

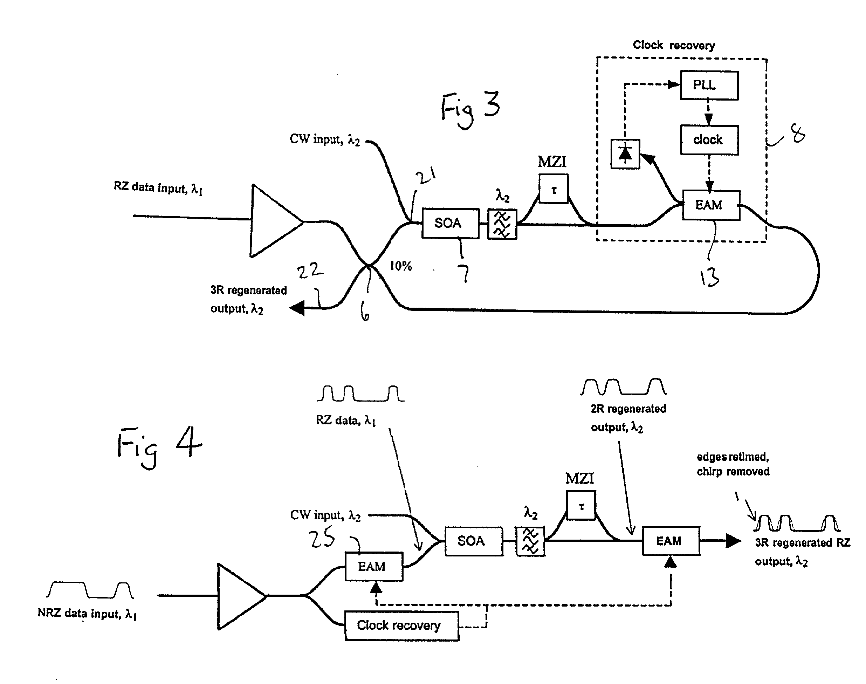

The arrangement of Figure 2 is substantially the same, except that the electroabsorption modulator 13 acts additionally as a phase-sensitive detector in the clock recovery unit 8. The minor part of the input data-stream, freed of light of wavelength λ₂ by a bandpass filter 15, is passed in a counter-propagating direction through the electroabsorption modulator and thence to a photodiode 16, which has a bandwidth greater than the loop bandwidth of the clock-recovery phase-locked loop (but not sufficient for it to respond to the system pulse frequency) - typically in a range from a few hundred kilohertz to a few megahertz. The phase relationship is set (in an integrated optical implementation) or adjusted (in a fibre-optic implementation) such that the arrival there of the steepest part of the rise (or alternatively of the fall) of the incoming pulses is in the middle of the period for which the EAM is turned on, and so the electrical output of photodiode 16 responds markedly to a fluctuation in timing (a phase error); phase-locked loop controller 17 commands clock 18 in the usual way to correct such errors and hold the output of the photodiode in a narrow variance band.

Figure 3 shows an alternative arrangement in which the new continuous wave is introduced by a wavelength-division multiplexor (WDM) 21 (or a coupler) immediately upstream of the semiconductor optical amplifier 7, allowing the 3R regenerated output 22 to be taken from the splitter/coupler 6. The use of a WDM at 21 has the advantage, compared with the arrangements of Figures 1 and 2, that substantially all the continuous-wave input power is available to the semiconductor optical amplifier, but also has the disadvantage that the operating wavelengths of the device becomes fixed, and it is also likely to be a little more expensive; a simple coupler would avoid those disadvantages, but is likely to introduce a 3dB (50%) loss.

Figure 4 is identical with Figure 1, except for the addition of a further electroabsorption modulator 25 which is switched "off" in the inter-pulse periods of the input data-stream to convert an incoming stream from NRZ to RZ format so that it can be regenerated as described.

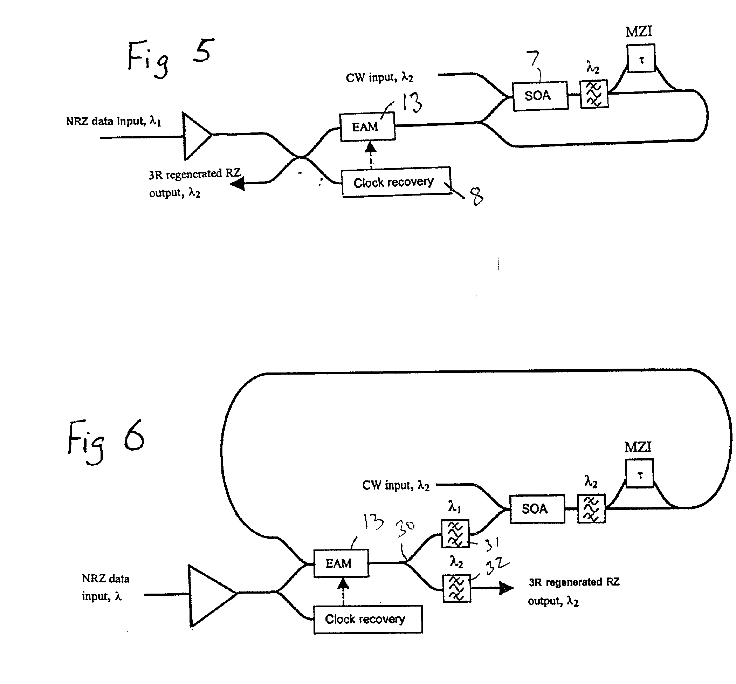

Figure 5 shows a regenerator that is essentially the same as the one in Figure 3, except that the NRZ input signal propagates in a direction counter to the output through the electroabsorption modulator for conversion to RZ format before entering the semiconductor optical amplifier. It will be appreciated that precise dimensional design and/or path length adjustment will be needed to ensure correct phase relationships for both functions.

The arrangement shown in Figure 6 is similar except that the input and output signals co-propagate through the electroabsorption modulator 13, and a splitter 30 and band-pass filters 31 and 32 are needed to separate them (or a WDM could be used).

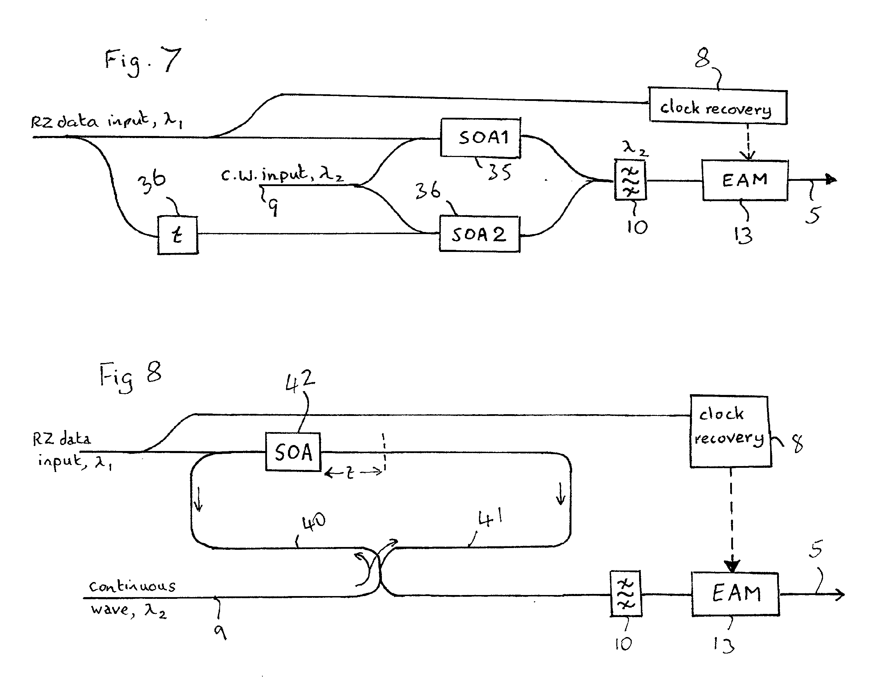

Figure 7 shows a regenerator generally similar to the one shown in Figure 1, but using a modified form of Mach-Zehnder interferometer in which separate, identical SOA's are provided in the two arms; the data input signal (after amplification, if required) is, apart from a minor fraction needed for clock recovery, divided between the two SOA's, as is the continuous wave input at 9. Time delay 36 may be located at any convenient position in one of the arms. Function is substantially the same as in the arrangement of Figure 1.

Figure 8 is also generally similar to Figure 1, but illustrates the use of a Sagnac interferometer, in which the continuous wave input is split and launched into both arms 40 and 41 of a loop waveguide. A single SOA 42 is positioned asymmetrically in the loop to establish a time delay of 2t (where t is the transit time from the centre of the loop to the SOA, or *vice versa*), producing wavelength translation and interference as before. It should be noted that, because part of the output light counter-propagates with the input light, the length of the SOA needs to be limited to avoid pulse spreading due to the input data signal producing changes in the SOA within the transit time of the output light: for a 40Gbit/s system, we estimate that an SOA no more than 1 mm long will be needed.

The arrangements described are generally capable of implementation in either fibre or integrated optical circuit form (or partly in each); because of the loop configuration, the arrangement of Figure 8 is primarily suitable for implementation in fibre. When fine adjustment of timing is needed to establish the correct optical phase relationship for the required interference, fibre implementations will usually provide facility to stretch a length of fibre, whereas integrated implementations will usually provide for adjustment by local heating of a waveguide, or more generally by temperature adjustment (these adjustment techniques are not applicable to Sagnac interferometer implementations, but they do not need them as the two path lengths are automatically equal).

*Any discussion of the background to the invention herein is included to explain the context of the invention. Where any document or information is referred to as "known", it is admitted only that it was known to at least one member of the public somewhere prior to the date of this application. Unless the content of the reference otherwise clearly indicates, no admission is made that such knowledge was available to the public or to experts in the art to which the invention relates in any particular country (whether a member-state of the PCT or not), nor that it was known or disclosed before the invention was made or prior to any claimed date. Further, no admission is made that any document or information forms part of the common general knowledge of the art either on a world-wide basis or in any country and it is not believed that any of it does so.*

## Claims

1. Apparatus for 3R regeneration of optical digital signals comprising a modulator, an electrical clock for driving the modulator, and a controller for maintaining synchronism of the clock with optical input pulses and a 2R regenerator, and is **characterised in that** the modulator is located downstream of and receives the output of the 2R regenerator.

2. Apparatus as claimed in claim 1 in which the modulator is an electroabsorption modulator.

3. Apparatus as claimed in claim 1 in which the modulator is a lithium niobate modulator.

4. Apparatus as claimed in any one of claims 1-3 in which the controller is a phase-locked loop controller.

5. Apparatus as claimed in any one of claims 1-3 in which the controller is of the narrow-band filter type.

6. Apparatus as claimed in any one of claims 1-3 in which the controller is of the locked oscillator type.

7. Apparatus as claimed in any one of claims 1-6 in which the 2R regenerator is also a wavelength translator and is of the kind comprising a time-delay interferometer, at least one semiconductor optical amplifier and a source of continuous wave of the desired output wavelength coupled so that the SOA operates in cross-phase modulation mode.

8. Apparatus as claimed in claim 7 in which the length of delay in the interferometer is about 30-70% of the input pulse length.

9. Apparatus as claimed in claim 7 or claim 8 in which the 2R regenerator/wavelength translator is of the kind in which an input signal and continuous wave are coupled to the same side of a single SOA, and a Mach-Zehnder interferometer is coupled to the other side.

10. Apparatus as claimed in claim 7 or claim 8 in which the 2R regenerator/wavelength translator is a Mach-Zehnder interferometer with separate semiconductor optical amplifiers in its two arms and with continuous wave input split and supplied to both semiconductor optical amplifiers.

11. Apparatus as claimed in claim 7 or claim 8 in which the 2R regenerator/wavelength translator is a Sagnac interferometer with a single semiconductor optical amplifier.

12. Apparatus as claimed in any one of claims 1-11 in which the electrical clock is set to turn on the modulator for a time shorter than the length of the pulses received from the 2R regenerator.

13. Apparatus as claimed in any one of claims 1-12 in which the modulator itself acts as a phase-sensitive detector.

14. Apparatus as claimed in any one of claims 1-13 including also a modulator to convert an incoming data-stream in NRZ format to RZ format.

15. Apparatus as claimed in claim 14 in which the said modulator serves also as the modulator that re-times the output pulses.

16. A method of "3R" regeneration of digital optical signals that have become degraded comprising retiming pulses of the signal by means of a modulator driven by an electrical clock controlled to maintain synchronism with optical input pulses and reshaping pulses of the signal by means of a 2R regenerator, **characterised by** locating the modulator downstream of the 2R regenerator so as to receive its output.

17. A method as claimed in claim 16 comprising using the 2R regenerator as a wavelength translator.

18. A method as claimed in claim 16 comprising using two 2R regenerator/wavelength translators in series to generate output at the same wavelength as the incoming signal.

19. A method as claimed in any one of claims 16-18 in which the modulator is turned on by the electrical clock for a time shorter than the length of the pulses received from the 2R regenerator.

20. A method as claimed in any one of claims 16-19 in which the modulator itself is used as a phase-sensitive detector.

21. A method as claimed in any one of claims 1-20 of processing an incoming data-stream in NRZ format comprising first converting it to RZ format by a modulator.

22. A method as claimed in claim 21 comprising using the same modulator to convert the signals to RZ format and to retime the pulses.

23. Apparatus for 3R regeneration of optical digital signals substantially as described with reference to any one figure of the drawings.

24. A method of 3R regeneration of optical digital signals substantially as described with reference to any one figure of the drawings.
